# EUROPEAN PATENT SPECIFICATION

(11) **EP 0 823 926 B1**
(45) Date of publication and mention of the grant of the patent: **24.02.1999**
(21) Application number: 96913348.7
(22) Date of filing: 03.05.1996
(51) Int. Cl.: C08L 71/12, C08L 25/16

(54) **COMPATIBILIZED BLENDS OF POLYPROPYLENE AND POLY(PHENYLENE ETHER) POLYMERS**
VERTRÄGLICHE MISCHUNGEN VON POLYPHENYLENETHER UND POLYPROPYLEN
MELANGES COMPATIBILISES DE POLYMERES DE POLYPROPYLENE ET DE POLY(PHENYLENE ETHER)

(30) Priority: 03.05.1995 US 434637
(43) Date of publication of application: 18.02.1998
(73) Proprietor: EXXON CHEMICAL PATENTS INC., Baytown, TX 77520-5200 (US)
(72) Inventor: LI, Dongming, Fairport, NY 14450 (US); WANG, Hsien-Chang, Bellaire, TX 77401 (US); YEE, Albert, Fan, Ann Arbor, MI 48109-2136 (US); YEH, Richard, Cheng-Ming, Bellaire, TX 77401 (US)
(74) Representative: Dew, Melvyn John
(86) International application number: US9606307
(87) International publication number: WO9634915

(56) References cited:
- EP-A- 0 358 993
- EP-A- 0 404 351
- EP-A- 0 572 667
- WO-A-92/02582
- WO-A-94/03542
- WO-A-96/08534
- DATABASE WPI Derwent Publications Ltd., London, GB; AN 90-2498428(33) XP002010332 & JP,A,02 173 138 (NIPPON GE PLASTICS) , 4 July 1994

## Description

### BACKGROUND OF THE INVENTION

### Field of the Invention:

This invention relates to compatibilized blends comprising polypropylene and poly(phenylene ether) polymers having enhanced mechanical properties.

### Description of Related Art:

Poly(phenylene ether) (PPE) resins are well known engineering thermoplastics possessing relatively high stiffness and softening points, e.g., in excess of about 179°C (Ency. Poly. Sci. and Eng.). These polymers are useful in many applications where good mechanical properties and heat resistance are required. On the negative side, the PPE's generally suffer from poor impact resistance and poor processability. For example, the room temperature notched Izod impact strength of PPE's is generally below 1 ft.-lb./in. The intrinsic viscosity of a typical PPE is about 0.50, which is not suitable for processing by the usual injection molding technique.

Binary blends comprising PPE and crystalline polypropylene (PP) demonstrate a dramatic improvement in flexural modulus and heat distortion temperature as compared with PP alone, and are more readily processible than PPE alone. However, these blends are highly incompatible such that other mechanical properties such as tensile strength, tensile strain and impact strength tend to suffer because of the poor dispersion of PPE in the PP matrix and poor adhesion of PPE to the PP matrix. The resulting blends are quite brittle regardless of the molecular weights and ductility of the individual components.

Various attempts have been made to improve the compatibility of PPE/PP blends. A common technique is to incorporate in such blends a minor amount of one or more compatibilizing elastomeric polymers. For example, hydrogenated sytrene-diene block copolymers have been used to compatibilize and toughen PP/PPE blends, as described in Akkapeddi and Van Buskirk (Adv. in Poly Sci, 1992, 11 p. 263). However, such blends exhibit little or no enhanced stiffness as compared with PP alone. JP 04068043-A similarly discloses a molding composition stated to have improved impact resistance based on a blend of PP, PPE and an elastomer which may comprise ethylene/propylene rubber, ethylene/propylene/diene rubber and/or block copolymers of butadiene and styrene.

In addition, JP 04293941-A discloses blends stated to have improved impact strength and solvent resistance based on a blend of PP, PPE and 0.5 parts by weight (per 100 PP + PPE) of brominated butyl rubber. JP 04293942-A teaches similar compositions also containing a hydrogenated polystyrene-polybutadiene-polystyrene (SEBS) block copolymer. JP 04293943-A teaches a composition comprising a blend of PP, PPE, a hydrogenated or partially hydrogenated SBS block copolymer and a haiogenated (brominated) SBS block copolymer.

While these and other approaches may result in PPE-based blend compositions exhibiting some improvement in mechanical properties and processability, such blends generally exhibit poor stiffness and/or modulus properties. In addition, the presence of diene unsaturation in many of these compatibilizing polymers, e.g., SBS block copolymers and/or butyl rubber, can lead to a decrease in thermal and ultraviolet stability of the resulting blends.

### SUMMARY OF THE INVENTION

The present invention provides for thermoplastic polymer compositions having high impact strength, high heat resistance and good processability comprising a blend of:
a) polypropylene;
b) a poly(phenylene ether); and
c) an interpolymer of a C₄ to C₇ isomonoolefin containing from about 0.5 to 20 mole% of copolymerized para-alkylstyrene, para-haloalkylstyrene or mixtures of para-alkylstyrene and para-haloalkylstyrene (hereinafter isoolefin interpolymer).

Preferred blends contain from about 25 to 65 wt% of propylene polymer, about 30 to 70 wt% of poly(phenylene ether) and from about 1 to 20 wt% of the isomonoolefin interpolymer, based on the polymer content of the blend.

The invention also provides for a process for improving the physical properties and compatibility of compositions containing crystalline propylene polymers and poly(phenylene ether) polymers comprising melt mixing these components with from about 1 to about 20 wt%, based on polymer content, of isomonoolefin interpolymer. The isoolefin copolymer can comprise from about 0.5 to 20 mole% of copolymerized para-substituted styrene at a temperature in the range of from about 260°C to 310°C until a uniform blend is obtained.

The isomonoolefin interpolymer preferably includes functionalized interpolymers prepared by replacing a portion of benzylic hydrogen with functional groups such as halogen or other functional groups mentioned hereinafter. The composition may also contain one or more additional modifier polymers such polystyrene, impact polystyrene, hydrogenated styrene/diene/styrene block copolymers and like polymers. The compatibilized compositions of this invention combine the good mechanical properties and high heat resistance of PPE polymers with the excellent processability and economy of crystalline propylene polymers thereby providing shaped articles, e.g., fibers, films and molded articles, of high impact strength, high heat resistance and improved mechanical properties.

### DETAILED DESCRIPTION OF THE INVENTION

It has been demonstrated that isobutylene/para-methylstyrene interpolymers particularly benzylic carbon atom halogenated interpolymers, are capable of interacting with poly(phenylene ether) polymers when melt blended at high temperature, particularly in the presence of a reaction promoter such as zinc oxide, as described in copending U.S. Application S.N. 08/306,047, filed September 14, 1994.

The present invention builds further on these discoveries to provide compatibilized blends comprising crystalline propylene polymer and a poly(phenylene ether) polymer having improved processability and improved mechanical properties.

Poly(phenylene ether ) (PPE) thermoplastic engineering resins which are used in accordance with this invention are well known, commercially available materials produced by the oxidative coupling polymerization of alkyl substituted phenols. They are generally linear, amorphous polymers having a glass transition temperature in the range of about 190°C to 235°C.

Preferred PPE materials comprise the structure: 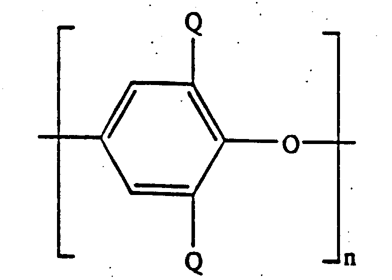 wherein Q is a monovalent substituent group selected from halogen, hydrocarbon having less than 8 carbon atoms, hydrocarbonoxy and halohydrocarbonoxy. More preferably, Q is the same or different alkyl group having from 1 to 4 carbon atoms and n is a whole integer of at least 100, preferably from 150 to about 1200. Examples of preferred polymers are poly(2,6-dialkyl-1,4 phenylene ethers) such as poly(2,6 dimethyl-1, 4-phenylene ether), poly(2-methyl-6-ethyl-1, 4-phenylene ether), poly)2-methyl-6-propyl-1, 4-phenylene ether), poly-(2,6-dipropyl-1, 4-phenylene ether) and poly(2-ethyl-6-propyl-1, 4-phenylene ether). These polymers and their method of preparation are further described in U.S. Patent 3,383,435, the complete disclosure of which is incorporated herein by reference.

Crystalline propylene polymers which are present as a blend component in the composition of the invention include polypropylene and crystalline copolymers of propylene with up to 20 wt% of a copolymerizable C₂ or C₄-C₈ monoolefin, most preferably ethylene. These polymers are well known in the art and are generally prepared by polymerization of propylene or a propylene/monoolefin mixture in the presence of the so called Ziegler/Natta transition metal catalysts, e.g., a transition metal halide combined with a tri alkyl aluminum compound. Polypropylene can also be prepared in the presence of metallocenes and activators. Preferred propylene polymers for use in the present invention exhibit a Melt Flow Index at 230°C in the range of from about 0.1 to 100, more preferably from about 0.1 to 10.

The C₄-C₇ isoolefin interpolymers used in the invention are random elastomeric copolymers of a C₄ to C₇ isomonoolefin, such as isobutylene and a para-alkylstyrene or para-haloalkylstyrene comonomer, preferably para-methylstyrene containing at least about 80%, more preferably at least about 90% by weight of the para-isomer, and also include functionalized interpolymers wherein at least some of the alkyl substituent groups present in the styrene monomer units contain benzylic halogen or some other functional group. Preferred materials may be characterized as isobutylene interpolymers containing the following monomer units randomly spaced along the polymer chain: 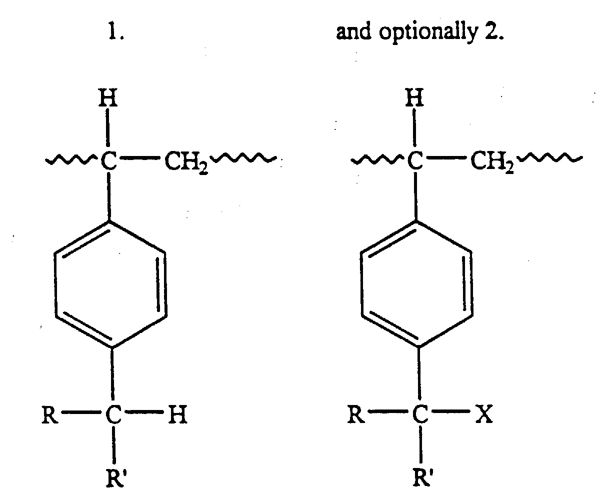 wherein R and R' are independently hydrogen, lower alkyl, preferably C₁ to C₇ alkyl and primary or secondary alkyl halides and X is a functional group such as halogen. Preferably R and R' are each hydrogen. Up to about 60 mole% of the para-substituted styrene present in the interpolymer structure may be the functionalized structure (2) above.

Where monomer units 2 in the above formula are absent, then the isomonoolefin interpolymer is non-functionalized, i.e., is a random copolymer of isomonoolefin and para-alkylstyrene. The most preferred of interpolymers are copolymers of isbbutylene and para-methylstyrene containing from about 0.5 up to about 20 mole % of para-methylstyrene randomly copolymerized along the polymer chain.

Where monomer units 2 in the above formula are present, the isomonoolefin interpolymer is at least a terpolymer containing from about 0.5 up to 60 mole% of functionalized monomer units 2 based on the content of aromatic monomer units 1 and 2. The functional group X may be halogen or some other functional group incorporated by nucleophilic substitution of benzylic halogen with the other groups such as alkoxide, phenoxide, carboxylate, thiolate, thioether, thiocarbamate, dithiocarbamate, thiourea, xanthate, cyanide, malonate, amine, amide, carbazole, phthalamide, maleimide, cyanate and mixtures thereof. These functionalized isomonoolefin interpolymers and their method of preparation are more particularly disclosed in U.S. Patent 5,162,445, the complete disclosure of which is incorporated herein by reference.

Most useful of such functionalized materials are elastomeric random interpolymers of isobutylene and para-methylstyrene containing from about 0.5 to about 20 mole% para-methylstyrene wherein up to about 60 mole% of the methyl substituent groups present on the benzyl ring contain a bromine or chlorine atom, preferably a bromine atom These polymers have a substantially homogeneous compositional distribution such that at least 95% by weight of the polymer has a para-alkylstyrene and para-benzylic haloalkylstyrene content within 10% of the average para-alkylstyrene content of the polymer. More preferred polymers are also characterized by a narrow molecular weight distribution (Mw/Mn) of less than about 5, more preferably less than about 2.5, a preferred viscosity average molecular weight in the range of from about 20,000 up to about 200,000 and a preferred number average molecular weight in the range of from about 25,000 to about 750,000, as determined by Gel Permeation Chromatography.

The interpolymers may be prepared by a slurry polymerization of the monomer mixture using a Lewis Acid catalyst, followed by halogenation, preferably bromination, in solution in the presence of halogen and a radical initiator such as heat and/or light and/or a chemical initiator.

Preferred interpolymers are brominated interpolymers which generally contain from about 0.1 to about 5 mole% of bromomethyl groups. More preferred interpolymers contain from about 0.05 up to about 2.5 wt% of bromine based on the weight of the interpolymer, most preferably from about 0.05 to 0.75 wt% bromine, and are substantially free of ring halogen or halogen in the polymer backbone chain.

These interpolymers, their method of preparation, their method of cure and graft or functionalized polymers derived therefrom are more particularly disclosed in the above referenced U.S. Patent No. 5,162,445 incorporated herein by reference.

In order to achieve a good balance between enhanced mechanical properties and processing properties, the polymer components may be blended in the range of from about 25 to 65 wt% propylene polymer (PP), about 30 to 70 wt% of poly(phenylene ether) polymer (PPE) and from about 1 to 20 wt% of the isomonoolefin interpolymer, based on the polymer content of the blend. More preferred blends contain from about 35-55 wt% PP, 35-55 wt% of PPE and about 5-10 wt% of isomonoolefin interpolymer, each based on the polymer content of the blend.

Compatibility of the three component blend may be further enhanced where the isomonoolefin interpolymer contains benzylic functional group such as halogen, e.g., bromine which is capable of reacting with PPE under mixing conditions. This reaction may be further promoted by inclusion of a catalyst in the formulation which will promote the electrophilic substitution reaction, such as zinc oxide, magnesium oxide, zinc bromide, ferric chloride and the like. These promotes may be added at a level in the range of from about 0.01 to about 1.5 wt%, more preferably from about 0.05 to about 0.5 wt%, based on the content of halogenated interpolymer present in the composition.

The melt processability of the composition may be further enhanced or controlled by optionally including a vinyl aromatic polymer or copolymer in addition to the isoolefin interpolymer in the composition. Examples of such polymers are polystyrene, copolymers of styrene with less than 50 wt% of acrylonitrile, block copolymers of styrene with a conjugated diene such as butadiene or isoprene as well as hydrogenated or partially hydrogenated versions thereof, high impact polystyrene and mixtures thereof. A particularly preferred styrene polymer for this purpose is a hydrogenated styrene-diene-styrene block copolymer, more correctly referred to as a styrene-ethylene/butylene-styrene (SEBS) block copolymer. These styrene polymers generally have a number average molecular weight in the range of about 25,000 to 1,000,000 and may be included in the composition at a level in the range of about 1-10 wt%, based on the total polymer content of the blend.

Since the isoolefin interpolymer is quite tacky even at room temperature, it may be desirable to first form a masterbatch composition of the interpolymer mixed with another polymer such as an olefin polymer, melt blend and extrude the mixture to form non-tacky pellets. These pellets may then be melt blended with the PPE to form one blend component of this invention. Suitable olefin polymers include one or a mixture of crystallizable polymers such as polypropylene, high density polyethylene and ethylene/propylene copolymers as well as amorphous polymers such as low density polyethylene and copolymers of ethylene/propylene and up to 10 wt% of a non-conjugated diene such as norbornadiene, 1, 4-hexadiene, dicyclopentadiene, and the like. Generally speaking, these masterbatch pre-blends may contain from about 50 to 95 wt% of the interpolymer and the balance one or a mixture of the olefin polymers, most preferably a crystalline propylene polymer. Tack may also be reduced by pre-dusting the interpolymer with zinc oxide or other of the powdered reaction promoters described above.

Alternatively, the blends may be prepared by combining all the polymer components under shear mixing conditions using any suitable melt mixing device such as a Banbury Mixer, or, most preferably, in a mixer/extruder. Preferred melt mixing temperatures are in the range of from about 260°C to about 310°C, more preferably from about 270°C to about 300°C, for a period of mixing time sufficient to achieve a uniform dispersion of the polymer components within the matrix polymer, usually about 0.5 to 4 minutes.

In a more preferred embodiment of the invention, the blend design is such that PP serves as the matrix polymer phase and PPE forms a dispersed phase within the PP matrix. The elastomeric interpolymer tends in turn to be evenly dispersed within the PPE dispersed phase as fine spherical particles, thereby serving to toughen the PPE dispersed phase. It is also believed that some of the interpolymer dispersed particles may migrate to the interface between the PP and PPE phases, thereby serving to compatibilize the PP/PPE blend without migrating into the PP matrix, which could lead to a substantial loss of stiffness properties in the blend composition.

The compositions of this invention may also include effective amounts of other ingredients normally included in PPE compositions including antioxidants, pigments, colorants, fillers, plasticizers and the like.

The following examples are illustrative of the invention. The material identified in the following description as "Exxpro"™ elastomer is a benzylically brominated interpolymer of isobutylene and para-methylstyrene (PMS) containing 5 wt% PMS, 0.3 mole% of benzylically brominated PMS (measured by NMR), 0.5 wt% bromine based on the weight of the polymer (measured by X-ray fluorescence). The interpolymer has a viscosity average molecular weight of 300,000, measured as a dilute solution in diisobutylene at 20°C. Other materials referred to below are commercially available as follows:
PP - Polypropylene homopolymer available from Exxon Chemical Corp. under the trade name Excorene PP1042, MFI = 1.9.
PPE - Poly (2,6-dimethyl-1,4 phenylene ether) available from GE plastics under the trade designation PPO®-N640.
SEBS - Kraton-G 1650 available from Shell
EXXPRO™ - Above described brominated copolymer of isobutylene and para-methylstyrene available from Exxon Chemical Corp.

Binary blends of the examples containing PPE and PP were made in W/P ZSK-30 co-rotating intermeshing twin-screw extruder fitted with a strand die at the extruder exit. The compositions were mixed and extruded over a temperature profile of 260°C to 310°C. Elastomer-containing blends were prepared by first mixing the PPE and elastomer(s) in an extruder over a temperature profile of 270°C to 310°C, pelletizing the extrudate by cooling with water and then mixing the pellets with the PP in the WP extruder. All products contained about 0.5 wt% antioxidant and samples containing EXXPRO™ also contained 0.1 wt% zinc oxide, based on the weight of the EXXPRO™ polymer. Extruded pellets were dried to remove any surface moisture.

Mechanical tests were obtained by molding the pellets into mechanical molding bars using a 15 ton Boy® injection molding machine. Tests were performed according to the following procedures.

| **Test** | **Test Method** |
|---|---|
| Tensile Strength | ASTM D-638 |
| Elongation | ASTM D-638 |
| Notched Izod Impact Strength | ASTM D-256 |
| Flexural Modulus | ASTM D-790 |
| Heat Distortion Temp. (HDT) | ASTM D-648 |

### Example 1

A series of different formulations (B-I) and a control PP (A) were prepared by the mixing procedure - described above. These formulations had the composition as shown in Table 1. Results of mechanical property testing are also shown in Table 1.

**TABLE 1**

| **Composition and Property** | **A** | **B** | **C** | **D** | **E** | **F** | **G** |
|---|---|---|---|---|---|---|---|
| PP | 100 | 70 | 60 | 50 | 50 | 50 | 50 |
| PPE | | 30 | 40 | 50 | 40 | 40 | 36 |
| SEBS | | | | | 10 | | 5 |
| EXXPRO™ | | | | | | 10 | 9 |
| Notched izod impact (J/m) | 20 | 27 | 27 | 21 | 165 | 64 | 176 |
| Flexural modulus (MPa) | 132.9 | 1290 | 1380 | 1545 | 1130 | 1505 | 1314 |
| Tensile strength (MPa) | 36.2 | 33.1 | 33.8 | 37.2 | 33.8 | 30.8 | 28.2 |
| Tensile strain (%) | 234 | 9 | 7 | 6 | 207 | 16 | 93 |
| HDT°(C)@ 66 psi load | 83 | 148 | 156 | 163 | nt | 146 | 122 |
| nt - not tested | | | | | | | |

Example is the PP control. The PP has low impact strength (<50 J/m) and low HDT.

Examples B, C and D are PP/PPE binary blends used as controls. The PPE content has a strong positive effect on the flexural modulus and the heat distortion temperature, a moderate, positive effect on the tensile strength, but an adverse effect on the notched izod impact strength and the tensile strain. The blend morphology of Example D is characterized by very large and non-uniform dispersed phases of PPE in the PP matrix, as shown by microscopic examination.

Example E is a control blend of PP with PPE and SEBS. Compared with Example D containing the same amount of PPE, this example exhibits great improvement in the notched izod impact strength, and tensile elongation, but there is a great loss in stiffness. The stiffness is lower than in Example A.

Example F is a blend of PP with PPE/Exxpro™ blend. Compared with Example C containing the same amount of PPE, this blend exhibits much higher flexural modulus, improved tensile strain and notched Izod impact strength. Microscopic examination shows the morphology of this blend (Example F) to be characterized by uniform dispersed phases of PPE in the PP matrix, and the PPE dispersed phases are much finer than that in control Example D.

Example G incorporates both SEBS and Exxpro™ in the PP/PPE blends. Compared with Examples E and F containing more PPE, this blend exhibits a notched izod impact strength similar to that for Example E, much higher than Examples C and F, but the stiffness is much higher than Example E. This blend exhibits much better toughness/stiffness balance, and its HDT is still much higher than that of PP (Example A). Microscopic examination shows the morphology of this blend (Example G) to be characterized also by uniform dispersed phases of PPE in the PP matrix, and the PPE dispersed phases are even finer than that in Example F, demonstrating the additional compatibilization effect of SEBS block copolymer.

## Claims

1. A thermoplastic polymer composition comprising a blend of:
a) crystalline polypropylene;
b) a poly(phenylene ether); and
c) an interpolymer of C₄-C₇ isomonoolefin containing from 0.5 to 20 mole% of copolymerized para-alkylstyrene.

2. The composition of claim 1 containing from I to 20 wt% of said interpolymer, based on the polymer content of said blend.

3. The composition of claim 2 containing from 25 to 65 wt% of said polypropylene and 30 to 70 wt% of said poly(phenylene ether), based on the polymer content of said blend.

4. The composition of claim 1 wherein said isomonoolefin is isobutylene and said para-alkylstyrene is para-methylstyrene.

5. The composition of claim 1 wherein said interpolymer is a polymer of isobutylene containing the following aromatic monomer units randomly spaced along the polymer chain: 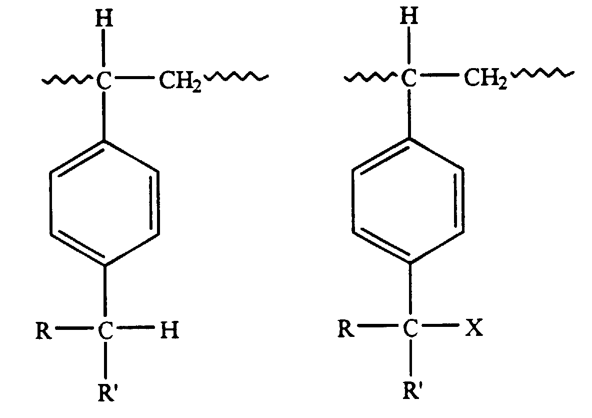 wherein R and R' are independently hydrogen, C₁ to C₇ alkyl, and primary or secondary alkyl halides and X is a functional group.

6. The composition of claim 5 wherein the X-containing monomer units comprise from 0.5 to 60 mole% of the total content of said aromatic monomer units present in said interpolymer.

7. The composition of claim 5 wherein X is halogen.

8. The composition of claim 7 wherein R and R' are each hydrogen and X is bromine present in said interpolymer at a level of less than 2.5 wt%.

9. The composition of claim 8 wherein bromine is present in said interpolymer at a level of from 0.05 to 0.75 wt%.

10. The composition of claim 7 further containing from 0.01 to 1.5 wt% of an electrophilic reaction promoter, based on the weight of said interpolymer present in the composition.

11. The composition of claim 10 wherein said reaction promoter is zinc oxide.

12. The composition of claim 1 wherein said poly(phenylene ether) comprises the structure: 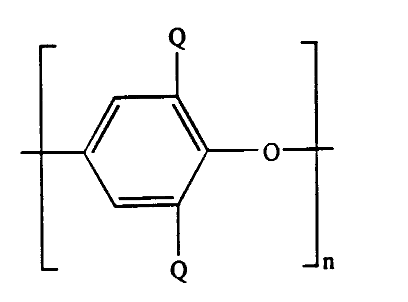 wherein Q is the same or different alkyl group having from 1 to 4 carbon atoms and n is a whole integer of at least 100.

13. The composition of claim 12 wherein said poly(phenylene ether) is poly(2,6-dimethyl-1, 4-phenylene ether).

14. The composition of claim 1 further containing from 1 to 10 wt% of a vinyl aromatic polymer based on the total polymer content of the blend.

15. The composition of claim 14 wherein said vinyl aromatic polymer is a styrene-ethylene/butylene-styrene block copolymer.

16. The composition of claim 1 wherein said propylene polymer is a polypropylene having a Melt Flow Index at 230°C in the range of 0.1 to 100.

17. A process for preparing a compatible thermoplastic polymer blend comprising:
a) forming a mixture comprising from 25 to 65 wt% crystalline propylene polymer, from 30 to 70 wt% of a poly(phenylene ether) polymer and from 1 to 20 wt% of an interpolymer of a C₄ to C₇ isomonoolefin containing 0.5 to 20 mole% of copolymerized para-alkylstyrene; and
b) melt mixing said mixture at a temperature in the range of 260°C to 310°C until a uniform blend is obtained.

18. The process of claim 17 wherein said interpolymer is a brominated polymer of isobutylene and para-methyl-styrene containing bromine at a level of from 0.05 to 0.75 wt%.

19. The process of claim 18 wherein said poly(phenylene ether) polymer and said interpolymer are first melt mixed at a temperature in the range of 270°C to 320°C to form a uniform mixture, and said uniform mixture is subsequently melt mixed with said polypropylene.

20. An article prepared by heat shaping the composition of claim 1.

## Patentansprüche

1. Thermoplastische Polymerzusammensetzung, die ein Gemisch aus
a) kristallinem Polypropylen,
b) Poly(phenylenether) und
c) Interpolymer aus C₄- bis C₇-Isomonoolefin umfaßt, das 0,5 bis 20 Mol.% copolymerisiertes para-Alkylstyrol umfaßt.

2. Zusammensetzung nach Anspruch 1, die 1 bis 20 Gew.% des Interpolymers umfaßt, bezogen auf den Polymergehalt des Gemisches.

3. Zusammensetzung nach Anspruch 2, die 25 bis 65 Gew.% des Polypropylens und 30 bis 70 Gew.% des Poly(phenylenether)s umfaßt, bezogen auf den Polymergehalt des Gemisches.

4. Zusammensetzung nach Anspruch 1, bei dem das Isomonoolefin Isobutylen ist und das para-Alkylstyrol para-Methylstyrol ist.

5. Zusammensetzung nach Anspruch 1, bei der das Interpolymer ein Polymer aus Isobutylen ist, das die folgenden aromatischen Monomereinheiten 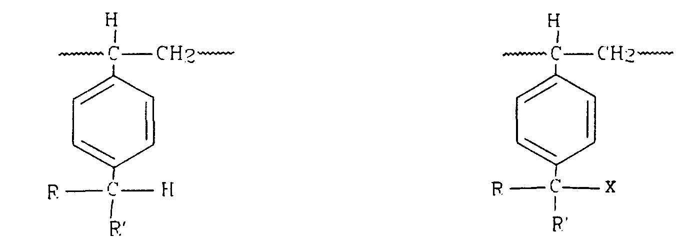 statistisch beabstandet entlang der Polymerkette enthält, wobei R und R' unabhängig Wasserstoff, C₁- bis C₇-Alkyl und primäre oder sekundäre Alkylhalogenide sind und X eine funktionelle Gruppe ist.

6. Zusammensetzung nach Anspruch 5, bei der die X-haltigen Monomereinheiten 0,5 bis 60 Mol.% des Gesamtgehalts der in dem Interpolymer vorhandenen aromatischen Monomereinheiten umfassen.

7. Zusammensetzung nach Anspruch 5, bei der X Halogen ist.

8. Zusammensetzung nach Anspruch 7, bei der R und R' jeweils Wasserstoff sind und X Brom ist und in dem Interpolymer in einer Menge von weniger als 2,5 Gew.% vorhanden ist.

9. Zusammensetzung nach Anspruch 8, bei der Brom in dem Interpolymer in einer Menge von 0,05 bis 0,75 Gew.% vorhanden ist.

10. Zusammensetzung nach Anspruch 7, die ferner 0,01 bis 1,5 Gew.% eines elektrophilen Reaktionspromoters enthält, bezogen auf das Gewicht des in der Zusammensetzung vorhandenen Interpolymers.

11. Zusammensetzung nach Anspruch 10, bei der der Reaktionspromoter Zinkoxid ist.

12. Zusammensetzung nach Anspruch 1, bei der der Poly(phenylenether) die Struktur 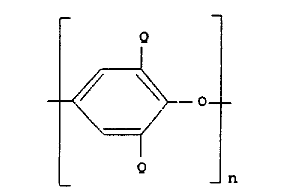 umfaßt, in der Q die gleiche oder eine unterschiedliche Alkylgruppe mit 1 bis 4 Kohlenstoffatomen ist und n eine ganze Zahl von mindestens 100 ist.

13. Zusammensetzung nach Anspruch 12, bei der der Poly(phenylenether) Poly(2,6-dimethyl-1,4-phenylenether) ist.

14. Zusammensetzung nach Anspruch 1, die ferner 1 bis 10 Gew.% vinylaromatisches Polymer enthält, bezogen auf den Gesamtpolymergehalt des Gemisches.

15. Zusammensetzung nach Anspruch 14, bei der das vinylaromatische Polymer ein Styrol-Ethylen/Butylen-Styrol-Blockcopolymer ist.

16. Zusammensetzung nach Anspruch 1, bei der das Propylenpolymer Polypropylen mit einem Schmelzindex im Bereich von 0,1 bis 100 bei 230°C ist.

17. Verfahren zur Herstellung eines verträglichen thermoplastischen Polymergemisches, bei dem
a) eine Mischung gebildet wird, die 25 bis 65 Gew.% kristallines Propylenpolymer, 30 bis 70 Gew.% Poly(phenylenether)polymer und 1 bis 20 Gew.% Interpolymer aus C₄- bis C₇-Isomonoolefin, das 0,5 bis 20 Mol.% copolymerisiertes para-Alkylstyrol enthält, umfaßt, und
b) die Mischung bei einer Temperatur im Bereich von 260°C bis 310°C schmelzgemischt wird, bis ein gleichförmiges Gemisch erhalten wird.

18. Verfahren nach Anspruch 17, bei dem das Interpolymer ein bromiertes Polymer aus Isobutylen und para-Methylstyrol ist, das Brom in einer Menge von 0,05 bis 0,75 Gew.% enthält.

19. Verfahren nach Anspruch 18, bei dem das Poly(phenylenether)polymer und das Interpolymer zuerst bei einer Temperatur im Bereich von 270°C bis 320°C schmelzgemischt werden, um eine gleichförmige Mischung zu bilden, und die gleichförmige Mischung nachfolgend mit dem Polypropylen schmelzgemischt wird.

20. Gegenstand, der durch Warmformung der Zusammensetzung gemäß Anspruch 1 hergestellt ist.

## Revendications

1. Composition polymérique thermoplastique, comprenant un mélange :
a) d'un polypropylène cristallin ;
b) d'un poly(éther de phénylène) ; et
c) d'un interpolymère d'une isomono-oléfine en C₄ à C₇ contenant 0,5 à 20 moles % d'un paraalkylstyrène copolymérisé.

2. Composition suivant la revendication 1, contenant 1 à 20 % en poids de l'interpolymère, sur la base de la teneur en polymères du mélange.

3. Composition suivant la revendication 2, contenant 25 à 65 % en poids du polypropylène et 30 à 70 % en poids du poly(éther de phénylène), sur la base de la teneur en polymères du mélange.

4. Composition suivant la revendication 1, dans laquelle l'isomono-oléfine consiste en isobutylène et le para-alkylstyrène consiste en para-méthylstyrène.

5. Composition suivant la revendication 1, dans laquelle l'interpolymère est un polymère d'isobutylène contenant les motifs monomériques aromatiques suivants espacés de manière aléatoire le long de la chaîne du polymère : 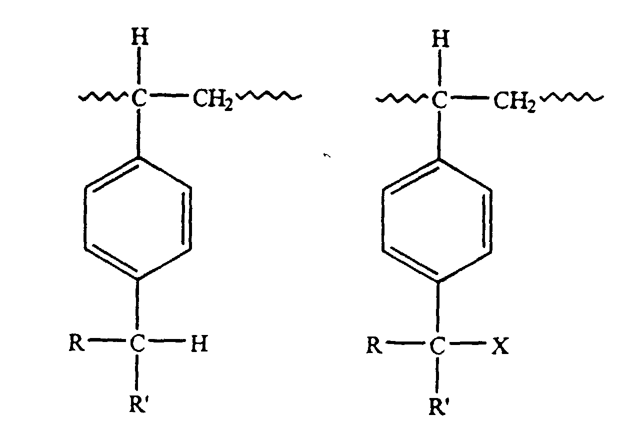 formules dans lesquelles R et R' représentent, indépendamment l'hydrogène, des groupes alkyle en C₁ à C₇ ou halogénure d'alkyle primaire ou secondaire, et X représente un groupe fonctionnel.

6. Composition suivant la revendication 5, dans laquelle les motifs monomériques contenant X représentent 0,5 à 60 moles % de la quantité totale des motifs monomériques aromatiques présents dans l'interpolymère.

7. Composition suivant la revendication 5, dans laquelle X représente un halogène.

8. Composition suivant la revendication 7, dans laquelle R et R' représentent chacun l'hydrogène et X représente le brome présent dans l'interpolymère en une teneur inférieure à 2,5 % en poids.

9. Composition suivant la revendication 8, dans laquelle le brome est présent dans l'interpolymère en une teneur de 0,05 à 0,75 % en poids.

10. Composition suivant la revendication 7, contenant en outre 0,01 à 1,5 % en poids d'un activateur de réaction électrophile, sur la base du poids de l'interpolymère présent dans la composition.

11. Composition suivant la revendication 10, dans laquelle l'activateur de réaction est l'oxyde de zinc.

12. Composition suivant la revendication 1, dans laquelle le poly(éther de phénylène) comprend la structure : 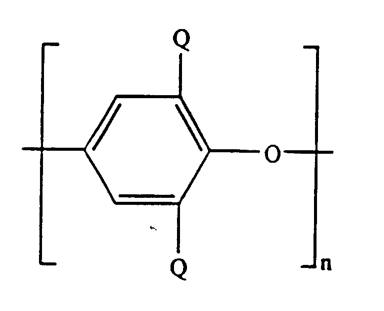 dans laquelle les groupes Q sont des groupes alkyle identiques ou différents ayant 1 à 4 atomes de carbone et n représente un nombre entier d'au moins 100.

13. Composition suivant la revendication 12, dans laquelle le poly(éther de phénylène) consiste en poly(éther de 2,6-diméthyl-1,4-phénylène).

14. Composition suivant la revendication 1, contenant en outre 1 à 10 % en poids d'un polymère aromatique vinylique sur la base de la teneur totale en polymères du mélange.

15. Composition suivant la revendication 14, dans laquelle le polymère aromatique vinylique est un copolymère séquence styrène-éthylène/butylène-styrène.

16. Composition suivant la revendication 1, dans laquelle le polymère de propylène est un polypropylène ayant un indice d'écoulement en masse fondue à 230°C compris dans l'intervalle de 0,1 à 100.

17. Procédé pour la préparation d'un mélange polymérique thermoplastique compatible, comprenant :
a) la formation d'un mélange comprenant 25 à 65 % en poids d'un polymère de propylène cristallin, 30 à 70 % en poids d'un poly-(éther de phénylène) et 1 à 20 % en poids d'un interpolymère d'une isomono-oléfine en C₄ à C₇ contenant 0,5 à 20 moles % d'un paraalkylstyrène copolymérisé ; et
b) le mélange en masse fondue dudit mélange à une température comprise dans l'intervalle de 260°C à 310°C jusqu'à obtention d'un mélange uniforme.

18. Procédé suivant la revendication 17, dans lequel l'interpolymère est un polymère bromé d'isobutylène et de para-méthylstyrène contenant du brome en une quantité de 0,05 à 0,75 % en poids.

19. Procédé suivant la revendication 18, dans lequel le poly(éther de phénylène) et l'interpolymère sont tout d'abord mélangés en masse fondue à une température comprise dans l'intervalle de 270°C à 320°C pour former un mélange uniforme, et ledit mélange uniforme est ensuite mélangé en masse fondue au polypropylène.

20. Article préparé en façonnant à chaud la composition suivant la revendication 1.
